# EUROPEAN PATENT SPECIFICATION

(11) **EP 2 554 457 B1**
(45) Date of publication and mention of the grant of the patent: **16.03.2016**
(21) Application number: 10848982.4
(22) Date of filing: 11.08.2010
(51) Int. Cl.: B62D 55/253, B62D 55/12

(54) **CRAWLER TRAVEL DEVICE**
RAUPENBEWEGUNGSVORRICHTUNG
DISPOSITIF DE CIRCULATION À CHENILLES

(30) Priority: 29.03.2010 JP 2010076227
(43) Date of publication of application: 06.02.2013
(73) Proprietor: Bridgestone Corporation, Tokyo 104-8340 (JP); Kubota Corporation, Osaka-shi, Osaka 556-8601 (JP)
(72) Inventor: ABIKO Yutaka, Yokohama-shi Kanagawa 244-8510 (JP); ISHIHARA Kazuma, Sakai-shi Osaka 590-0823 (JP); INAOKA Motonari, Sakai-shi Osaka 590-0823 (JP); KOBAYASHI Takashi, Sakai-shi Osaka 590-0823 (JP)
(74) Representative: Intès, Didier Gérard André
(86) International application number: PCT/JP2010/063608
(87) International publication number: WO 2011/121809

(56) References cited:
- WO-A1-2008/023820
- DE-A1-102008 015 653
- JP-A- S 638 079
- JP-A- 9 193 852
- JP-A- 63 008 079
- JP-A- 2003 011 860
- JP-A- 2009 061 829
- JP-A- 2009 061 829
- JP-U- H01 132 853
- US-A- 3 472 563
- US-A1- 2003 189 377
- US-A1- 2004 232 766

## Description

### TECHNICAL FIELD OF THE INVENTION

The present invention relates to a crawler propelling device comprising:
a crawler belt, the crawler belt including a belt main body made of rubber material, cored bars embedded in the belt main body at predetermined intervals in a belt circumferential direction, and a roller-guiding cored bar projection protruding from an inner circumferential surface of the crawler belt; and
a driving sprocket for providing the crawler belt with rotational power in the belt circumferential direction.

### BACKGROUND OF THE INVENTION

In a known crawler propelling device of the above-noted type, an engaging recess elongated greater in the belt width direction than in the belt circumferential direction is provided in the belt main body made of rubber between the cored bars embedded in the belt main body at predetermined intervals in the belt circumferential direction. A driving claw elongated in the same direction as the longitudinal direction of the engaging recess is provided in the driving sprocket for driving the crawler belt. Whereby, a contacting area at an engaging portion between the driving claw and the engaging recess is increased to transmit a great driving force of the driving claw to the rubber belt main body of the crawler belt (see Patent Document 1).

### PRIOR ART LIST

### PATENT DOCUMENT(S)

[Patent Document 1] JP 2009-078796 A or Japanese Unexamined Patent Application Publication No. 2009-078796 (see paragraphs 0031 and 0041; and Figs. 1, 2, 3, 5 and 6) JP 2009061829

The above-noted crawler propelling device uses the engaging recess formed in the belt main body of the crawler belt and the driving sprocket provided with the driving claw elongated in the same direction as the longitudinal direction of the engaging recess, thereby to provide a large contacting area between the driving claw and the engaging recess. By increasing the contacting area between the driving claw and the engaging recess in this manner, it is intended to reduce contact pressure applied from the driving claw on a contact surface of the engaging recess formed in the belt main body made of rubber as much as possible. On the other hand, such an arrangement has the following drawback.

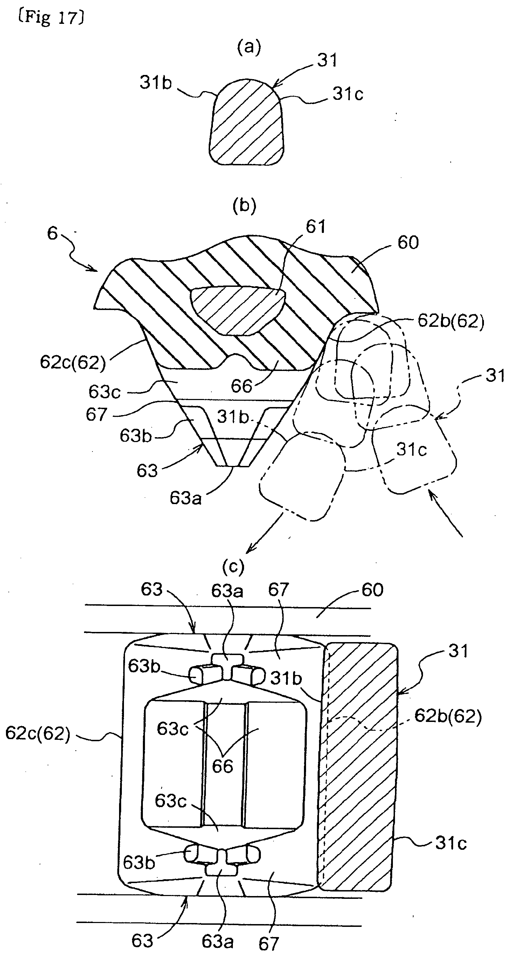

The driving claw of the driving sprocket is configured to describe a moving trace shown in imaginary lines in Fig. 17(b), when the driving claw is engaged with or disengaged from the engaging recess provided between the cored bars embedded at predetermined intervals in the circumferential direction of the crawler belt. The moving trace is determined so as to retain a certain gap between the trace of the driving claw and the cored bar projection of the crawler belt in the courses of engagement of the driving claw into the engaging recess and disengagement of the driving claw from the engaging recess.

The gap between the moving trace of the driving claw and the cored bar projection is provided for allowing the driving claw to avoid collision with the cored bar projection and move to engage with or disengage from the engaging recess even if a relative position between the belt main body and the driving sprocket is somewhat displaced in the belt circumferential direction when the belt main body made of rubber is stretched or contracted due to a load applied to the crawler belt, for example.

In the conventional arrangement as described above, a relatively large contacting area is secured between the belt main body made of rubber and the driving claw, which may advantageously prevent increase of the contact pressure applied to the engaging recess in operation and reduce a chance of generating noise caused by the collision with the cored bar projection.

On the other hand, in this conventional arrangement, the driving claw is likely to come into pressure contact with the contact surface of the engaging recess opposed to the driving claw in a rotational direction of the driving sprocket more tightly at a distal end portion hereof than at a proximal end portion thereof, as a result of which the contact surface of the engaging recess contacting the distal end portion of the driving claw may be deformed to a greater extent than the contact surface of the engaging recess contacting the proximal end portion.

Such a disadvantage occurs because the width of the driving claw at the proximal end portion in the rotational direction of the driving sprocket is limited in order to allow the driving claw to move with the certain gap being secured between the driving claw and the cored bar projection in the process in which the driving claw is engaged into engaging recess or disengaged from the engaging recess as noted above.

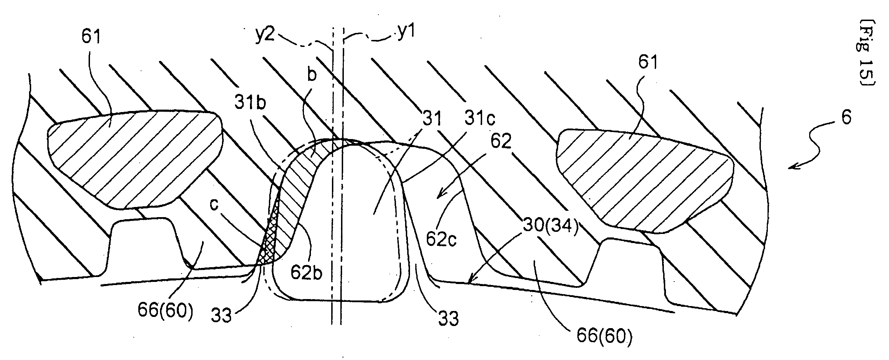

Thus, on the belt main body, the contact pressure applied to a portion of the contact surface on the engaging recess opposed to the driving claw in the rotational direction of the driving sprocket, which portion corresponds to the distal end portion of the driving claw, becomes larger than the contact pressure applied to a portion corresponding to the proximal end portion of the driving claw. As a result, the load applied to the contact surface of the engaging recess becomes uneven, which tends to lead to a larger amount of deformation of the belt main body made of rubber at the portion corresponding to the distal end portion of the driving claw than at the portion corresponding to the proximal end portion of the driving claw (see the area depicted by 'b' in Fig. 15).

An object of the present invention is to prevent the driving claw from interfering with the cored bar projection and yet to reduce the tendency of partially uneven deformation of the rubber material occurring on the contact surface of the engaging recess formed in the belt main body made of rubber, thereby to improve the durability and driving performance of the crawler belt.

### SUMMARY OF INVENTION

A crawler propelling device proposed by the present invention in order to achieve the above-noted object has the following characteristics in construction and effects, as under:-

A crawler propelling device comprising:
a crawler belt, the crawler belt including a belt main body made of rubber material, cored bars embedded in the belt main body at predetermined intervals in a belt circumferential direction, and a roller-guiding cored bar projection protruding from an inner circumferential surface of the crawler belt; and
a driving sprocket for providing the crawler belt with rotational power in the belt circumferential direction,
wherein the crawler belt has engaging recesses provided on the inner circumferential surface of the crawler belt to be engageable with driving claws of the driving sprocket, each of the engaging recesses being positioned between the cored bars in the belt circumferential direction,
wherein the driving claws are provided on an outer circumferential portion of a disk-shaped member of the driving sprocket at predetermined intervals in a circumferential direction of the disk-shaped member to be engaged into the engaging recesses formed in the crawler belt, the outer circumferential portion of the disk-shaped member being overlapped with a moving trace of the cored bar projection as viewed from a lateral side,
wherein each of the driving claws is projected laterally from a disk surface of the disk-shaped member in a belt width direction intersecting the disk surface of the disk-shaped member, and
wherein the engaging recesses and the driving claws have respective contact surfaces extending in opposition at a distance to each other, and a projecting contact portion is provided on one of the contact surfaces at a position offset in the belt width direction from a position opposed to the cored bar projection, the projecting contact portion projecting in a direction to reduce a distance to the other of the contact surfaces, compared with the distance between the respective contact surfaces.

With the above-noted arrangement in which the contact surface is elongated in the belt width direction with the engaging recess and the driving claw being engaged with each other to increase the contacting area, the contact pressure on the contact surface may be widely dispersed in the belt width direction.

Further, since the projecting contacting portion is provided at the position remote or offset from the position opposed to the cored bar projection in the belt width direction, the projecting contacting portion comes into contact with the contact surface in the remote position prior to coming into contact with the contact surface at the position where the engaging recess and the driving claw are positioned in opposition to each other. As a result, the portion corresponding to the position offset from the position in opposition to the cored bar projection in the belt width direction is compressively deformed to a greater extent than on the contact surface at the portion corresponding to the position where the engaging recess and the driving claw are positioned in opposition to each other owing to the presence of the projecting contact portion.

More particularly, the sum of the amounts of deformation of the rubber material on the contact surface between the driving claw and the engaging recess is proportional to the load applied to the contact surface. Therefore, if the amount of deformation of the rubber material is increased at the portion corresponding to the position offset from the position in opposition to the cored bar projection in the belt width direction, the amount of deformation of the rubber material associated with the compression on the contact surface at the position where the engaging recess and the driving claw are positioned in opposition to each other is reduced by the increased amount of deformation.

Thus, on the contact surface at the portion corresponding to the position offset from the position in opposition to the cored bar projection in the belt width direction, the driving claw contacting the contact surface is returned closer to a central position of the engaging recess in the belt circumferential direction due to the decrease in amount of deformation of the rubber material, compared with the arrangement in which no projecting contact portion is provided as noted above.

This advantageously achieves a good driving state easily with a reduced risk that the moving trace of the driving claw may deviate forwardly or rearwardly of the engaging recess in the belt circumferential direction.

In addition, since the projecting contact portion is formed at the position that is not opposed to the cored bar projection, the moving trace of the driving claw is offset from the position where the cored bar projection is present in the belt width direction even when the moving trace of the driving claw is in close proximity to the cored bar projection of the crawler belt as viewed from the lateral side. Thus, the projecting contact portion can be prevented from coming into contact with the cored bar projection to cause a disadvantage of generating noise less often.

Another crawler propelling device proposed by the present invention in order to achieve the above-noted object has the following characteristics in construction and effects, as under:-
A crawler propelling device comprising:
   a crawler belt, the crawler belt including a belt main body made of rubber material, cored bars embedded in the belt main body at predetermined intervals in a belt circumferential direction, and a pair of right and left roller-guiding cored bar projections, each of the cored bar projections protruding from an intermediate portion in a belt width direction of each of the cored bars on an inner circumferential surface of the crawler belt; and
   a driving sprocket for providing the crawler belt with rotational power in the bet circumferential direction,
   wherein the crawler belt has engaging recesses provided on the inner circumferential surface of the crawler belt to be engageable with driving claws of the driving sprocket, each of the engaging recesses being positioned between the cored bars in the belt circumferential direction and formed over a range between the right and left cored bar projections in the belt width direction,
   wherein the driving claws are formed on an outer circumferential portion of the disk-shaped member of the driving sprocket, which portion is fitted into a space between the right and left cored bar projections, to be engaged into the engaging recesses formed in the crawler belt at predetermined intervals in the belt circumferential direction of the disk-shaped member,
   wherein the driving claws are projected from a disk surface of the disk-shaped member to a range where the right and left cored bar projections are present, in the belt width direction intersecting the disk surface of the disk-shaped member, and
   wherein the engaging recesses and the driving claws have respective contact surfaces extending in opposition to each other, and a projecting contact portion is provided on one of the contact surfaces corresponding to a portion between the right and left cored bar projections in the belt width direction, the projecting contact portion projecting in a direction to reduce a distance to the other of the contact surfaces, compared with the distance between the respective contact surfaces at a portion outside of the space between the right and left cored projections in the belt width direction.

With the above-noted arrangement in which the contact surface is elongated in the belt width direction with the engaging recess and the driving claw being engaged with each other to increase the contacting area, the contact pressure on the contact surface may be widely dispersed in the belt width direction.

Further, since the projecting contacting portion is provided at the position of the contact surface where each of the engaging recesses is in opposition to each of the driving claws corresponding to the part between the right and left cored bar projections in the belt width direction, the projecting contacting portion comes into contact with the position of the contact surface corresponding to the part between the right and left cored bar projections prior to coming into contact with the contact surface at the portion corresponding to the outside of the part between the right and left cored projections in the belt width direction.

As a result, the portion corresponding to the part between the right and left cored bar projections in the belt width direction is compressively deformed to a greater extent than on the contact surface at the portion corresponding to the outside of the part between the right and left cored projections in the belt width direction.

More particularly, the sum of the amounts of deformation of the rubber material on the contact surface between the driving claw and the engaging recess is proportional to the load applied to the contact surface. Therefore, if the amount of deformation of the rubber material is increased at the portion corresponding to the part between the right and left cored bar projections in the belt width direction, the amount of deformation of the rubber material associated with the compression on the contact surface at the position corresponding to the outside of the part between the right and left cored projections in the belt width direction is reduced by the increased amount of deformation.

Thus, on the contact surface at the portion corresponding to the outside of the part between the right and left cored projections in the belt width direction, the driving claw contacting the contact surface is returned toward the central position of the engaging recess in the belt circumferential direction due to the decrease in amount of deformation of the rubber material, compared with the arrangement in which no projecting contact portion is provided as noted above.

This advantageously achieves a good driving state easily with a reduced risk that the moving trace of the driving claw may deviate forwardly or rearwardly of the engaging recess in the belt circumferential direction.

In addition, since the projecting contact portion is formed the portion corresponding to the part between the right and left cored bar projections in the belt width direction where the right and left cored bar projections are absent, the moving trace of the driving claw is remote from the position where the cored bar projections are present in the belt width direction even when the moving trace of the driving claw is in close proximity to the cored bar projections of the crawler belt as viewed from the lateral side. Thus, the projecting contact portion can be prevented from coming into contact with the cored bar projections to cause a disadvantage of generating noise less often.

According to a preferred embodiment of the present invention, the projecting contact portion is provided on the contact surface of the driving claw.

With the above-noted arrangement, since the projecting contact portion is provided on the contact surface of each of the driving claws, there is less possibility that the projecting contact portion may be worn away early to vary the amount of projection to a large extent than in the arrangement in which the projecting contact portion is provided in the side of the crawler belt made of rubber,

Thus, the amount of projection can be advantageously easily maintained in an initial condition for a long period of time, and the initial performance of the crawler propelling device can be easily maintained for a long period of time.

According to another preferred embodiment of the present invention, the contact surface of the driving claw excluding the projecting contact portion is shaped to be displaced closer toward an imaginary line segment extending from a rotational center of the driving sprocket to a tip end of the driving claw than a tooth edge profile of the driving sprocket which were described along an involute curve, and the contact surface of the projecting contact portion formed on the driving claw is shaped along the tooth edge profile of the driving sprocket which were described along the involute curve.

With the above-noted arrangement, since the contact surface of the projecting contact portion formed in the driving craw is shaped along the tooth edge profile of the driving sprocket representing the involute curve, the contact surface of the engaging recess pressed by the projecting contact portion of the driving claw receives the pressing action not only in the distal end portion but also in the proximal end portion of the driving claw comparably. Thus, on the contact surface of the engaging recess portion corresponding to the portion where the projecting contact portion is present, the amount of deformation of the rubber material, is not concentrated in the portion where the contact surface comes into contact with the distal end portion of the driving claw, but dispersed at the portion of the engaging recess that is less deformed where the contact surface comes into contact with the proximal end portion of the driving claw as well.

More particularly, the distal end portion and the proximal end portion of the driving claw engaged into the engaging recess correspond to a depth direction of the engaging recess. The amount of deformation of the rubber material of the engaging recess in the depth direction is not concentrated at the portion corresponding to the distal end portion of the driving claw but dispersed at the portion corresponding to the proximal end portion of the driving claw as well, as a result of which the amount of deformation of the rubber material in the engaging recess is also dispersed in the depth direction of the engaging recess.

Hence, in addition to the arrangement of the driving claw having a dimension increased in the belt width direction for allowing the amount of deformation of the rubber material in the engaging recess to be dispersed in the belt width direction, the amount of deformation is also dispersed in the depth direction of the engaging recess, which advantageously suppresses partial increase of the contact pressure on the contact surface by dispersing the amount of deformation of the rubber material in the engaging recess caused by the contact with the driving claw in a wide range to easily diminish wear and tear of the clawer belt main body.

### BRIEF DESCRIPTION OF DRAWING(S)

Fig. 1 is an overall side view of a tractor;
Fig. 2 is an overall side view of a crawler propelling device;
Fig. 3 is a top plan view of the crawler propelling device;
Fig. 4 is a sectional view taken on line IV-IV in Fig. 3;
Fig. 5 is a partial sectional view of a crawler belt in a belt circumferential direction;
Fig. 6 is a schematic perspective view of cored bar projections;
Fig. 7 is a perspective view showing part of a driving sprocket;
Fig. 8 is a side view showing an outer circumferential part of the driving sprocket;
Fig. 9 is a sectional view taken on line IX-IX in Fig. 8:
Fig. 10 is view from a direction of an arrow in Fig. 8;
Fig. 11 is an illustrative view showing relationships among a driving claw, an engaging recess and the cored bar projections, in which Fig. 11(a) shows a condition in which the driving claw is positioned at an end portion of the engaging recess and Fig. 11(b) shows a condition in which a rib portion of the driving claw comes into contact with the cored bar projection;
Fig. 12 is an illustrative view showing relationships among the driving claw, engaging recess and cored bar projections;
Fig. 13 is an illustrative view showing relationships between the rib portion of the driving sprocket and the cored bar projections;
Fig. 14 is a side view showing an engaging portion between the driving sprocket and the crawler belt;
Fig. 15 is an illustrative view showing an operating condition of the driving claw in the engaging recess;
Fig. 16 shows relationships among the driving claw, engaging recess and cored bar projections, in which Fig. 16(a) is a sectional view of the driving claw, Fig. 16(b) is an illustrative view showing a moving trace of the driving claw relative to the engaging recess and Fig. 16(c) is a top plan view showing a positional relationship between the engaging recess and the driving claw;
Fig. 17 shows relationships among the driving claw, engaging recess and cored bar projections in a comparative example, in which Fig. 17(a) is a sectional view of the driving claw, Fig. 17(b) is an illustrative view showing a moving trace of the driving claw relative to the engaging recess and Fig. 17(c) is a top plan view showing a positional relationship between the engaging recess and the driving claw;
Fig. 18 is a schematic top plan view showing relationships among the driving claw, engaging recess and cored bar projection in a modified embodiment; and
Fig. 19 is an illustrative view showing a positional relationship between a projecting contact portion formed in the crawler belt and cored bar projections.

### EMBODIMENT(S) OF THE INVENTION

An embodiment of the present invention will be described hereinafter in reference to the accompanying drawings.

### [Overall Construction of Tractor]

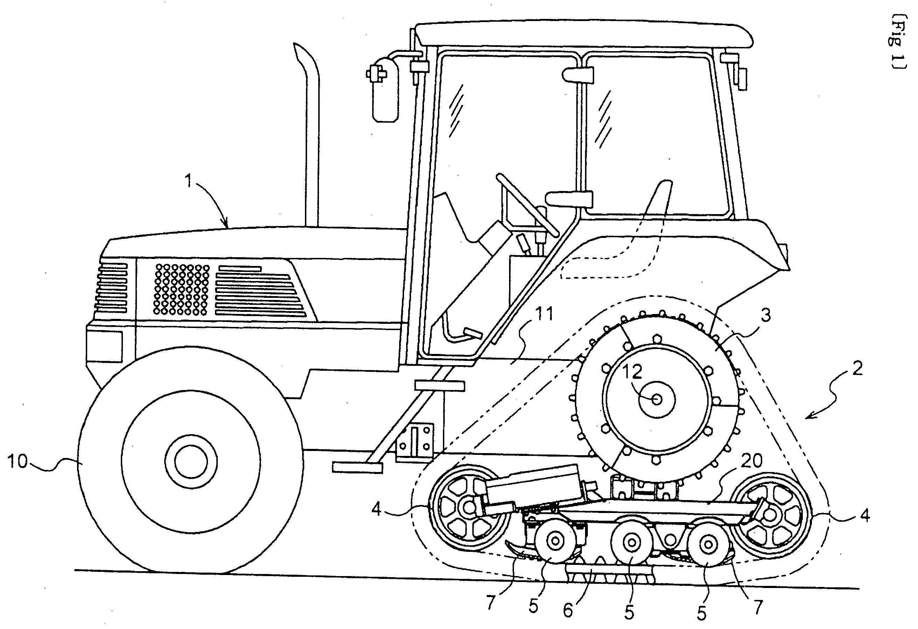

Fig. 1 shows a semi-crawler type tractor including a crawler propelling device 2 mounted rearwardly of the tractor. The semi-crawler type tractor is a tractor with its specifications being changed from those of a four-wheel drive tractor, and includes a pair of right and left steerable front wheels 10 mounted forwardly of a tractor vehicle body 1 with a cabin, and a pair of right and left crawler propelling devices 2 acting as a main propelling device mounted rearwardly of the tractor. Further, to a rear portion of the vehicle body is connected a tiller, harvester or work implement for performing various intermediate control operations through an unillustrated three-point link mechanism.

### [Crawler Propelling Device]

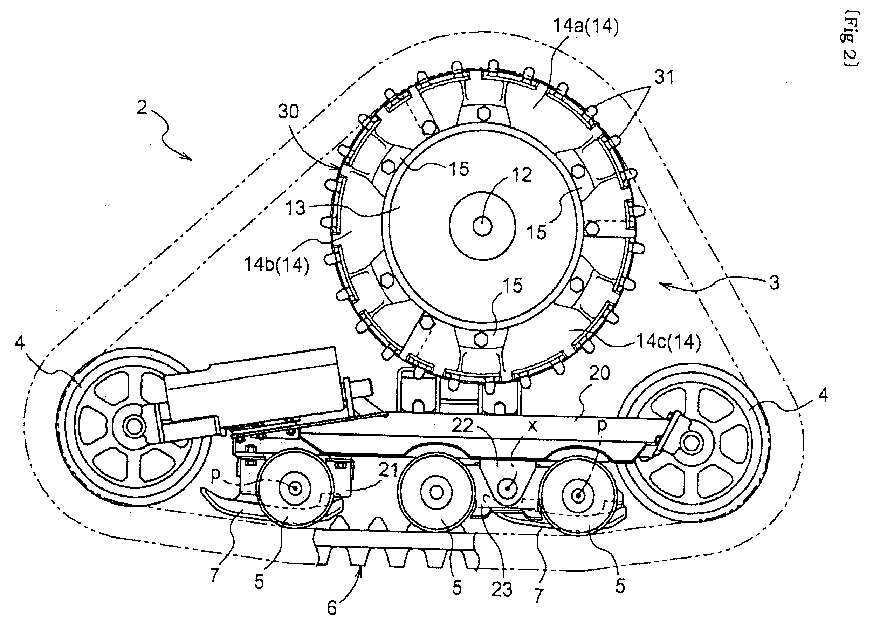

As shown in Figs. 1 and 2, each crawler propelling device 2 is provided with a large-diameter driving sprocket 3 connected to a rear axle 12 mounted on a rear transmission case 11 for driving the rear wheels.

A crawler belt 6 is tensionally wound around the driving sprocket 3, idler wheels 4 mounted forwardly and rearwardly of a track frame 20 and a plurality of rollers 5 arranged in line in a longitudinal direction of the track frame 20 to allow the driving sprocket 3 to be positioned in an intermediate position between the front and rear idler wheels 4 above the rollers 5.

A tread of the crawler propelling device 2 in a lateral direction is determined to be substantially the same as a tread of the front wheel 10 in order to travel between ridges in a field.

As shown in Fig. 2, three rollers 5 are arranged in a fore-and-aft direction. The front-end roller 5 is fixed in position to the track frame 20 through a fixing bracket 21.

The two rear-side rollers 5 are distributed to opposite end sides of a balance-like member 23 vertically pivotable about a laterally oriented axis (x) at an intermediate portion thereof to be oscillated like a seesaw.

Retainer guides 7 are provided in forward and rearward two positions to be swingable about a horizontal axis (p) back and forth for allowing each of the rollers 5 and the crawler belt 6 to maintain the fixed positional relationship and preventing each roller 5 from disengaging from the crawler belt 6.

The front-side retainer guide 7 is disposed continuously from a lower end of the fixing bracket 21 for fixedly supporting the front-end roller 5, while the rear-side retainer guide 7 is disposed continuously from a lower end of the balance-like member 23 to extend fore and aft across the rear-end roller 5.

### [Crawler Belt]

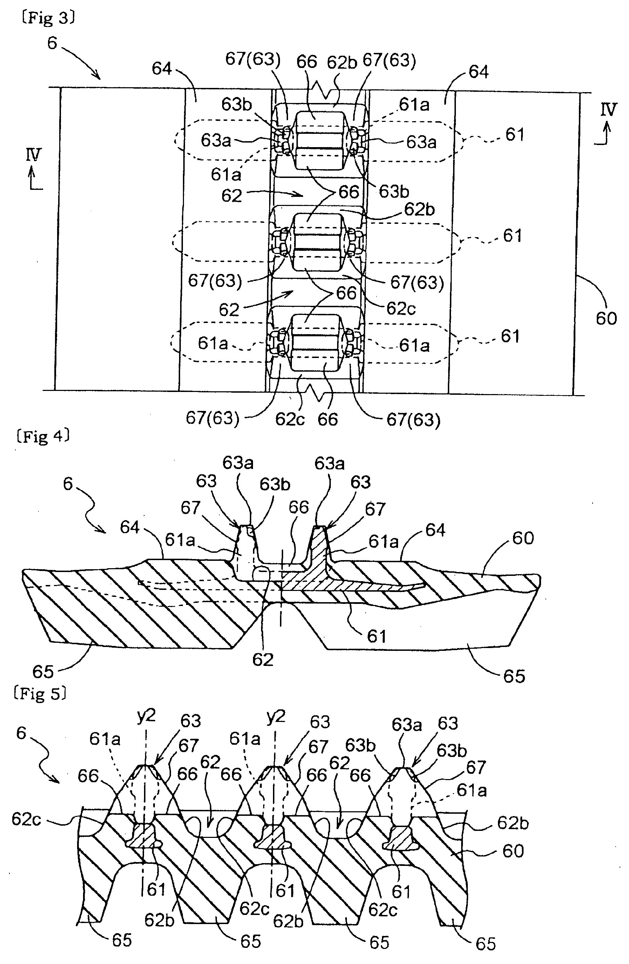

The crawler belt 6 has a construction as shown in Figs. 3 to 6.

The crawler belt 6 includes a belt main body 60 made of rubber material and formed as an endless belt, cored bars 61 embedded in the belt main body 60 at predetermined intervals in a belt circumferential direction, and engaging recesses 62 formed between the cored bars 61 in an inner circumferential surface of the belt for receiving driving claws 31 of the driving sprocket 3 and transmitting drive power to the crawler belt 6.

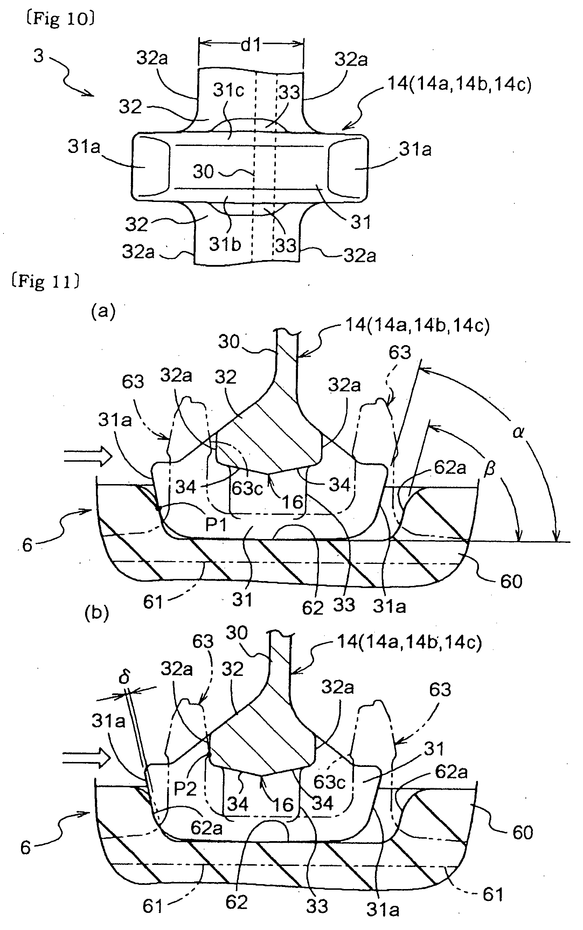

As shown in Figs. 3, 5 and 11, each engaging recess 62 is positioned between the cored bars 61 in the belt circumferential direction and elongated greater in a belt width direction than in the belt circumferential direction. As shown in Fig. 11(a), the engaging recess 62 has end faces 62a formed at lateral opposite ends thereof in reference to the belt width direction. With the crawler belt 6 being positioned on a horizontal plane, each of the end faces 62a is formed as an inclined surface having a predetermine belt inclination angle (β) (corresponding to an angle of inclination relative to the horizontal plane), not as a vertical surface normal to the horizontal plane.

As described above, the engaging recess 62 has the end faces 62a formed at the lateral opposite ends thereof in the belt width direction, so that each end face 62a defines the inclined surface with the belt inclination angle (β). Whereby, the lateral opposite end faces 62a of the engaging recess 62 are formed as tapered surfaces to be narrower toward an inner depth side (lower side in Fig. 11(a)) of the engaging recess 62.

Further, the engaging recess 62 has end faces in the belt circumferential direction formed as a forward-facing end face 62b and a backward-facing end face 62c acting as contact surfaces with the driving claw 31 by engaging a forward-facing surface 31b (an example of the contact surface) and a backward-facing surface 31c (an example of the contact surface) of the driving claw 31, respectively, which are engaged into the engaging recess 62 to transmit drive power from the driving sprocket 3 to the crawled belt 6.

As shown in Figs. 3 and 4, each cored bar 61 has a pair of right and left cored bar projections 63 each protruded from an intermediate portion in the belt width direction toward the inner circumferential surface of the belt for guiding the rollers. The driving sprocket 3 and the front and rear idler wheels 4 run between the cored bar projections 63.

Further, on the inner circumferential surface of the belt main body 60 positioned in a lateral outer portion of each cored bar projection 63 is formed a flat roller track surface 64 on which the rollers 5 make rolling movement. A propelling lag 65 having a thickness greater than that of the belt main body 60 excluding the portion of the cored bar projection 63 is integrally formed with and projects from an outer circumferential surface of the belt main body 60 at a position corresponding to the engaging recess 62 inside and outside the belt.

As shown in Figs. 3 to 6, a pressure-receiving block portion 66 is provided on the inner circumferential surface of the belt main body 60 between the cored bar 61 and the engaging recess 62 for transmitting, to the cored bar 61, drive power from the driving claw 31 of the driving sprocket 3 engaged into the engaging recess 62. More particularly, the pressure-receiving block portion 66 made of rubber is configured to transmit drive power to the cored bar 61 made of metal, while receiving compressive action from the driving claw 31 which is made of metal and engaged into the engaging recess 62. As a result, direct contact can be prevented between the metal materials of the driving claw 31 and the cored bar 61 to avoid occurrence of noise.

As shown in Figs. 4 to 6, a projecting portion 61a made of metal is integrally formed with part of the cored bar projection 63 and projects toward the inner circumferential surface of the belt. The cored bar projection 63 has a general mountain-shaped outer configuration by covering the projecting portion 61a with a mountain-shaped projection 67 made of rubber forming the belt main body 60.

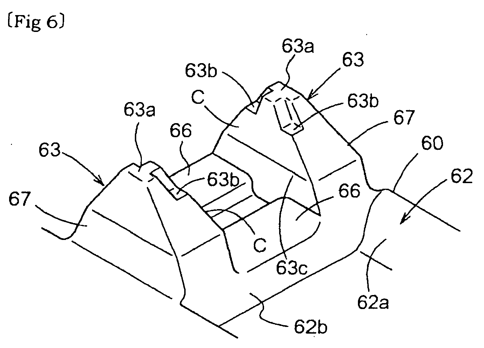

More particularly, the cored bar projection 63 has the mountain shape in cross section both in the belt width direction as shown in Fig. 4 and in the belt circumferential direction as shown in Fig. 5. Further, as shown in Fig. 6, the cored bar projection 63 has a surface directed inward in the belt width direction formed as an inclined surface acting as a guide surface (C) relative to the idler wheel 4 and the retainer guide 7.

In addition, the mountain-shaped cored bar projection 63 has a crest 63a forming a T-letter shape as viewed from the top with portions extending along the belt circumferential direction and inwardly directed portions extending perpendicularly to the portions extending along the circumferential direction. A concave portion 63b is provided at a portion of the guide surface (C) of the mountain-shaped projection 67 positioned inwardly of the belt width direction in the vicinity of the crest 63a.

### [Driving Sprocket]

The driving sprocket 3 has a construction as shown in Figs. 2 and 7 to 12.

More particularly, the driving sprocket 3 includes a large-diameter disk-shaped member 30 connected to the rear axle 12, and a plurality of the driving claws 31 projecting radially outward from an outer rim of the disk-shaped member 30.

The disk-shaped member 30 is formed from a hub disk 13 fixed to the rear axle 12 acting as a drive shaft, and a ring-shaped outer circumferential member 14 (corresponding to an outer circumferential portion of the disk-shaped member 30) that is connected by bolts to an outer circumferential side of the hub disk 13. The outer circumferential member 14 is trisected in the circumferential direction to provide a combination of divided segmental members 14a, 14b and 14c formed as partial arcs.

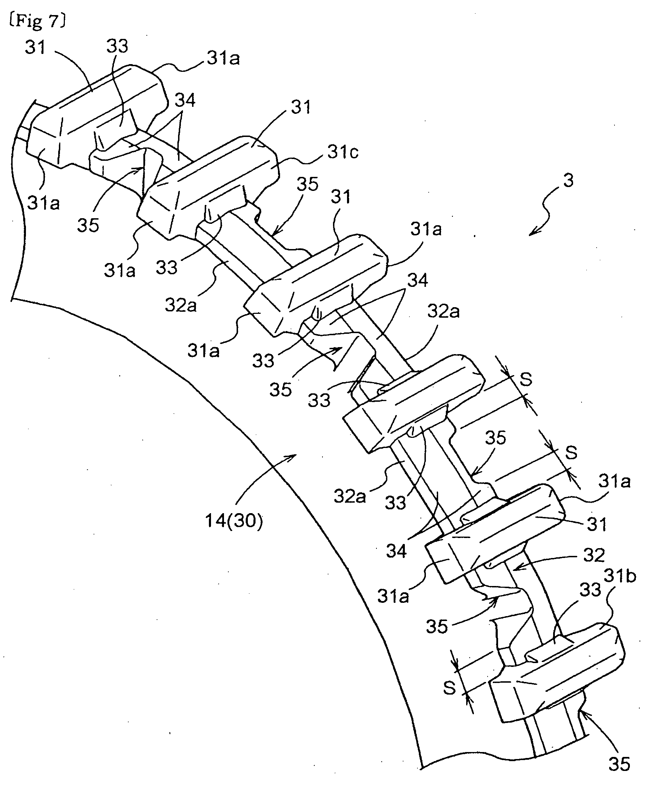

As shown in Figs. 7 to 10, the outer circumferential member 14 has a greater thickness in the vicinity of an outer circumferential rim 16 located radially outward than in the vicinity of a mounting portion 15 relative to the hub disk 13 located radially inward. The vicinity of the outer circumferential rim 16 acts as an annular rib portion 32.

The driving claw 31 is integrally formed with and projected radially outward from the outer circumferential rim 16 of the outer circumferential member 14 and projected laterally outward from the rib portion 32.

The rib portion 32 has a lateral thickness (d1) that is smaller than a gap between the laterally opposed right/left cored bar projections 63 of the crawler belt 6 and is determined as follows in correlation with the cored bar projection 63 and the driving craw 31.

As shown in Fig. 11(a), a lateral end face 31a of the driving claw 31 comes into contact with the end face 62a of the engaging recess 62 first. Thereafter, the end face 62a of the engaging recess 62 receives a pressing force from the driving claw 31 to be deformed by a certain amount of compression (δ) as shown in Fig. 11(b). Then, an edge 32a of the rib portion 32 comes into contact with an inner-end face 63c of the cored bar projection 63.

In this manner, the relative lateral position between the lateral edge 32a of the rib portion 32 and the driving claw 31 is predetermined so that, after the lateral end face 31a of the driving claw 31 comes into contact with the end face 62a of the engaging recess 62 to be elastically deformed by the certain amount, the lateral edge 32a of the rib portion 32, which corresponds to an end face of the disk-shaped member 30, comes into contact with the inner-end face 63c of the cored bar projection 63.

More particularly, with reference to Fig. 11 (a), it is assumed for the sake of convenience that a contacting point (P1) is located at a point of contact between part of the lateral end face 31 of the driving claw 31 and the end face 62a of the engaging recess 62. From the time of the contact at the contacting point (P1), there occurs a time lag until the edge 32a of the rib portion 32 comes into contact with the inner-end face 63c of the cored bar projection 63 at a contacting portion (P2) as shown in Fig. 11(b). To provide such a time lag, the relative lateral position between the lateral end face 31a of the driving claw 31 and the lateral edge 32a of the rib portion 32 is predetermined.

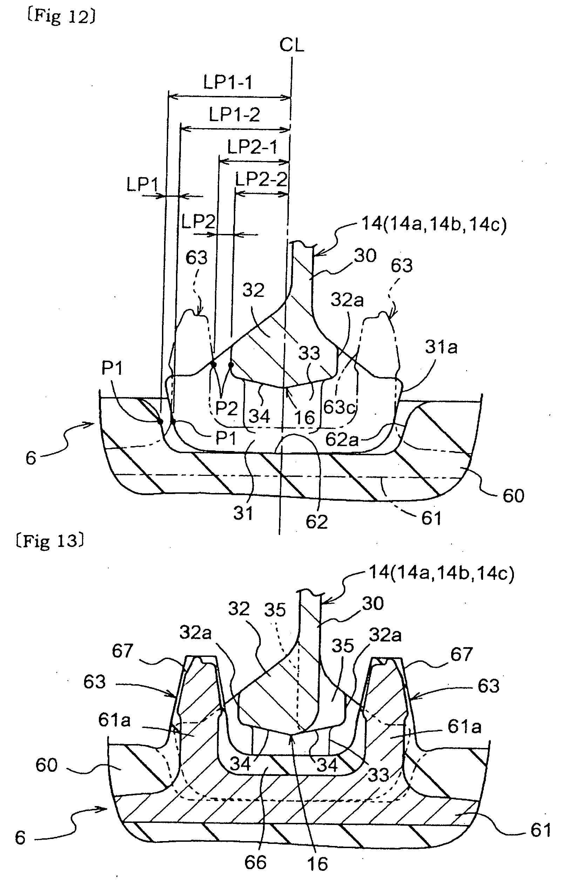

The above positional relationship can be described as follows with reference to Fig. 12.

When a lateral central position of the driving claw 31 is positioned on a center line (CL) of the engaging recess 62 in the belt width direction, the lateral end face 31a of the driving claw 31 has not yet come into contact with the end face 62a of the engaging recess 62 at the contacting portion (P1); and the edge 32a of the rib portion 32 has not yet come into contact with the inner-end face 63c of the cored bar projection 63 at the contacting portion (P2), either.

With the above-noted un-contacted state, there is a first gap (LP1) defined between a distance (LP1-1) (distance from the center line (CL) to the contacting portion (P1) on the end face 62a of the engaging recess 62) and a distance (LP1-2) (distance from the center line (CL) to the contacting portion (P1) on the lateral end face 31a of the driving claw 31).

On the other hand, there is a second gap (LP2) defined between a distance (LP2-1) (distance from the center line (CL) to the contacting portion (P2) on the inner-end face 63c of the cored bar projection 63) and a distance (LP2-2) (distance from the center line (CL) to the contacting portion (P2) on the edge 32a of the rib portion 32).

The second gap (LP2) is determined to be larger than the first gap (LP1) by an amount corresponding to the amount of compression (δ) that is provided when the end face 62a of the engaging recess 62 receives the pressing force from the driving claw 31 to be compressively deformed. Thus, there is a time lag, after the end face 62a of the engaging recess 62 receives the pressing force from the driving claw 31 to be compressively deformed as noted above, until the edge 32a of the rib portion 32 is moved in a sufficient amount to come into contact with the inner-end face 63c of the cored bar projection 63.

### [Driving Claw]

As shown in Fig. 7 through Fig. 12, the driving claw 31 is projected in the transverse direction (lateral direction) perpendicularly to the disk plane of the disk-shaped member 30 so that a lateral dimension of the driving claw 31 is set somewhat smaller than a length (width) of the engaging recess 62 in the belt width direction; and substantially equal to a length (width) between the right and left cored bar projections 63.

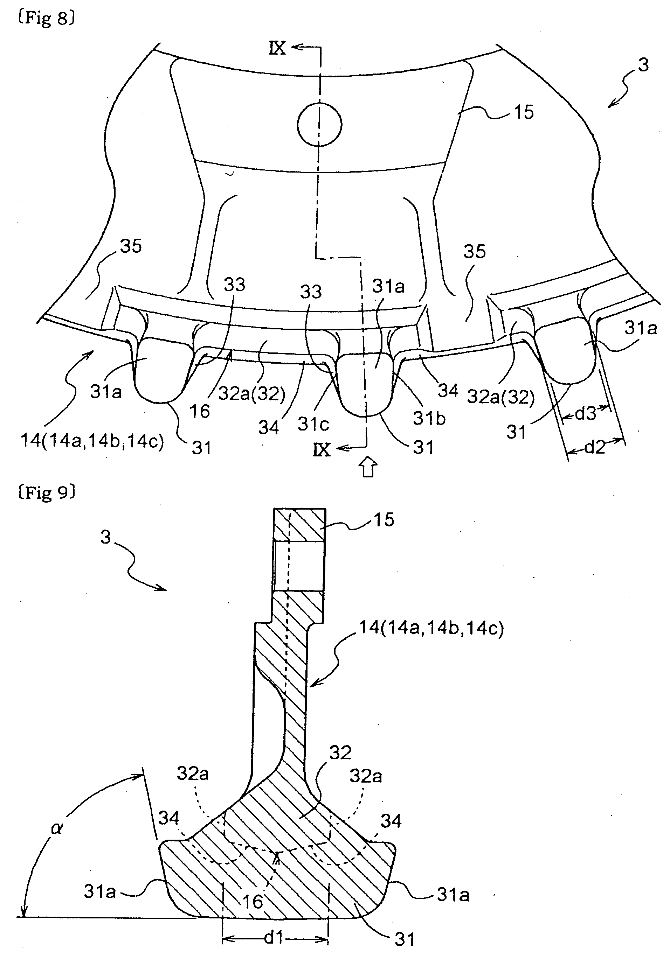

Assuming that an outer edge of the driving claw 31 is positioned on the horizontal plane as shown in Fig. 9 and Fig. 11, each of the lateral end faces 31a of the driving claw 31 is formed as an inclined surface having a predetermine claw inclination angle (α) (corresponding to an angle of inclination of the end face 31a of the driving claw 31 relative to the horizontal plane), not as a vertical surface normal to the horizontal plane.

The end faces 31a, formed as the inclined surfaces with the claw inclination angle (α), are provided at lateral opposite ends of the driving claw 31. Whereby, the end faces 31a of the driving claw 31 are formed as tapered surfaces to be narrower radially outward.

The claw inclination angle (α) is set equally to the belt inclination angle (β) for the end face 62a of the engaging recess 62 in the belt width direction.

On the other hand, a forward-facing surface 31b (side for providing a driving force to the crawler belt 6 in the vehicle forward direction) and a backward-facing surface 31c (side for providing a driving force to the crawler belt 6 in the vehicle reverse direction) positioned in front and the rear of the driving claw 31 in the circumferential direction extend generally along a normal line relative to the rotational center of the disk-shaped member 30. However, a circumferential width (d2) at a portion closer to the rotational center (closer to the root of the claw) is larger than a circumferential width (d3) at a portion farther away from the rotational center (closer to the tip of the claw) so that the driving claw 31 is tapered to be slightly narrower radially outward.

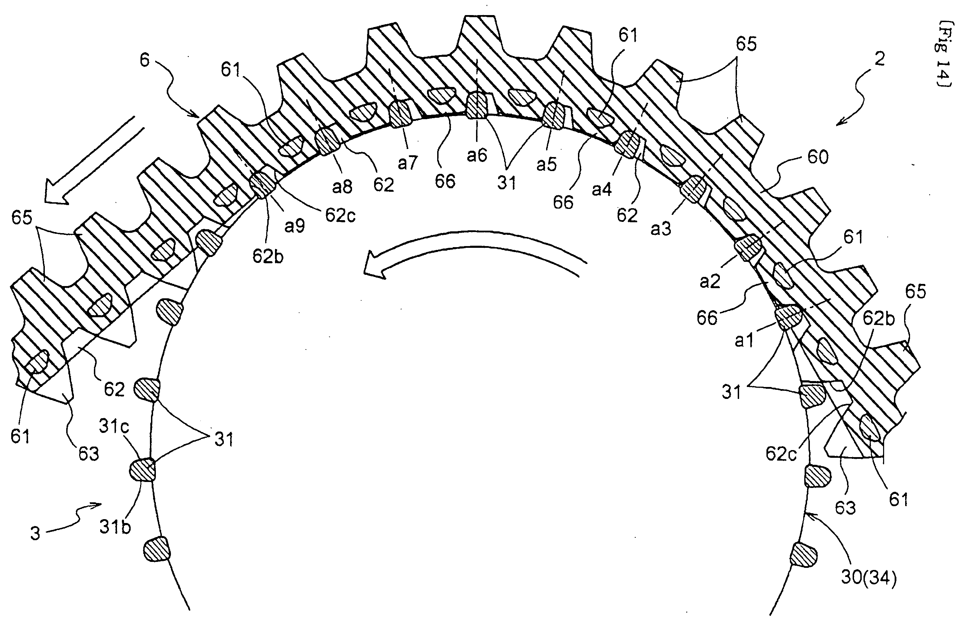

As shown in Fig. 14 viewed from a lateral side, the driving claws 31 are configured to come into engagement with the engaging recesses 62 of the crawler belt 6 to drive the crawler belt 6.

More particularly, engaging points (a1) to (a9) shown in Fig. 14 represent meshing portions between the engaging recesses 62 and the driving claws 31 of the driving sprocket 3 which is rotating counterclockwise in the Fig. 14. On the upstream side of the engaging point (a1) in the rotational direction of the driving sprocket 3, the driving claws 31 have not yet come into mesh with the engaging recesses 62. On the downstream side of the engaging point (a9) in the rotational direction of the driving sprocket 3, the driving claws 31 are disengaged from the engaging recesses 62.

Thus, among the engaging points (a1) to (a9), the engaging point (a1) represents a meshing starting point, while the engaging point (a9) represents a meshing ending point. Among the engaging points (a1) to (a9), pressing action applying from the driving claw 31 to the engaging recess 62 will be maximized at the engaging point (a8). The relationship between mounting intervals for the driving claws 31 and mounting intervals for the engaging recesses 62 is fixed.

### [Projecting Contact Portion]

Projecting contact portions 33 are formed on the forward-facing surface 31b and the backward-facing surface 31c, which are provided in the front and rear of each driving claw 31 in the circumferential direction, so as to be opposed to the forward-facing end face 62b and the backward-facing end face 62c of each engaging recess 62 of the crawler belt 6 in the belt circumferential direction, respectively.

As shown in Figs. 7, 8, 15, 16(a) and 16(c), the projecting contact portions 33 are formed on the forward-facing surface 31b and the backward-facing surface 31c opposed to the forward-facing end face 62b and the backward-facing end face 62c acting as the contact surfaces of the engaging recess 62, so as to project toward the forward-facing end face 62b and the backward-facing surface 62c with the driving claw 31 being engaged into the engaging recess 62 at portions each corresponding to the part between the right and left cored bar projections 63 in the belt width direction.

Compared with the forward-facing surface 31b and the backward-facing surface 31c extending along an imaginary line segment extending from the rotational center of the driving sprocket 3 to a tip end of the driving claw 31, the projecting contact portion 33 protrudes toward the forward-facing end face 62b or the backward-facing end face 62c of the engaging recess 62, whereby a distance between the projecting contact portion 33 and the forward-facing end face 62b is reduced, and also a distance between the projecting contact portion 33 and the backward-facing end face 62c is reduced.

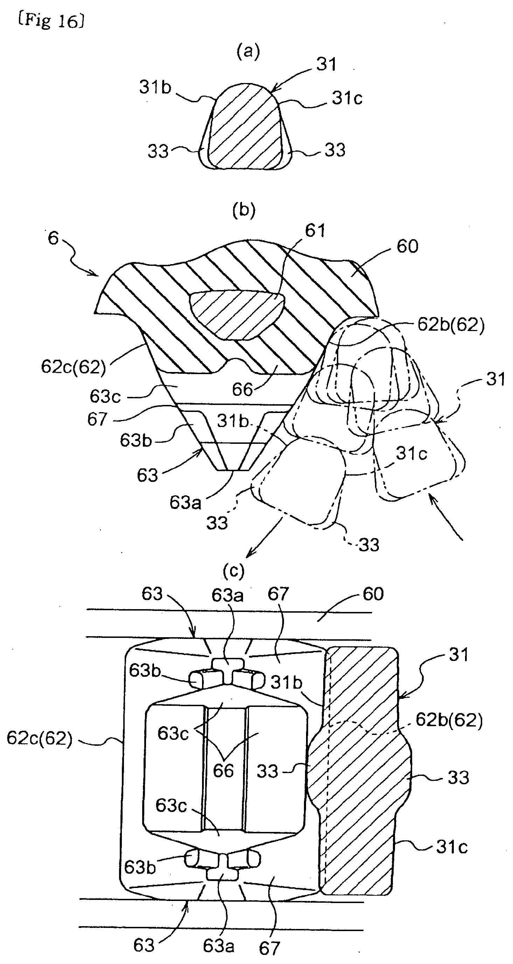

As shown in Figs. 16(a) and 16(b), a projecting portion of the projecting contact portion 33 as viewed from the lateral side is shaped along a tooth edge profile of the driving sprocket 3 formed as a gear wheel having a tooth edge profile described along an involute curve, and follows a moving trace along an outer profile of the cored bar projection 63.

The forward-facing surface 31b and the backward-facing surface 31c other than the projecting contact portion 33 are tapered to be slightly narrowed radially outward of the driving claw 31 as noted above. Those tapered surfaces correspond to surfaces shaped to be displaced closer toward imaginary line segments (corresponding to center lines (y1) and (y2) described later) extending from the rotational center of the driving sprocket 3 to the tip end of the driving claw 31 than the tooth edge profile of the driving sprocket 3 which were described along the involute curve.

As shown in Fig. 16(c) as viewed from the top, a position of the projecting contact portion 33 is set in opposition to the portion of the forward-facing end face 62b or the backward-facing end face 62c, which portion corresponds to the part between the right and left cored bar projections 63 in the belt width direction, and is offset from portions of the engaging recess 62 outside of the part between the right and left cored projections 63 in the belt width direction.

Thus, even if the projecting contact portion 33 moves closer to the outer profile of the cored bar projection 63 and rotated in the lateral side view as shown in Fig. 16(b), the projecting contact portion 33 is offset from the right and left cored bar projections 63 in the belt width direction in the top view as shown in Fig. 16(c). As a result, even when the moving trace of the projecting contact portion 33 somewhat varies in position in the belt circumferential direction, the projecting contact portion 33 is prevented from coming into contact with the cored bar projections 63.

The projecting contact portion 33 per se has a triangular shape in section having a greater thickness (width) at the root of the claw 31 than at the tip of the claw 31 so as to flare in the circumferential direction of the driving sprocket 3 in the lateral side view as shown in Fig. 16(a). In the top plan view as shown in Fig. 16(c), on the other hand, the projecting contact portion 33 has a rounded trapezoidal shape projecting away from the center of the driving claw 31 in the circumferential direction of the driving sprocket 3.

Further, as shown in Fig. 11(b), even when the rib portion 32 provided at the outer circumferential portion of the disk-shaped member 30 of the driving sprocket 3 comes into contact with one of the cored bar projections 63 and is limited against its lateral movement, the projecting contact portion 33 will not come into contact with the cored bar projection 63 by formed the projecting contact portion 33 at a position close to the central side of the rib portion 32.

As shown in solid line in Fig. 15, the forward-facing surface 31b of the driving claw 31 comes into contact with the forward-facing end face 62b of the engaging recess 62 to press the end face 62b forward in the driving direction (leftward in Fig. 15) and elastically deforms the belt main body 60 made of rubber within a range corresponding to an area (b) as shown with a hatched portion. At the same time, the projecting contact portion 33 elastically deforms the belt main body 60 within a range corresponding to an area (c) with a checkered portion.

During these, the central position of the driving claw 31 in the circumferential direction of the driving sprocket 3 is on the center line (y1).

With the above-noted arrangement, the amount of deformation of the belt main body 60 is the sum of the area (b) and the area (c). If no projecting contact portion 33 were formed, the amount of deformation of the belt main body 60 would be an area as shown in imaginary line in Fig. 15.

In the latter case, since there is no projecting contact portion 33 for deforming the belt main body 60 by the amount corresponding to the area (c), the amount of deformation corresponding to the amount of the area (b) deformed by the forward-facing surface 31b will be increased by the amount corresponding to the area (c). Thus, the driving claw 31 is moved slightly forward in the rotational direction of the driving sprocket 3 from the area (b) shown in solid line in Fig. 15 to be in the position shown in imaginary line. Then, the central position of the driving claw 31 in the rotational direction of the driving sprocket 3 will be on the center line (y2) which is positioned forwardly of the center line (y1) in the rotational direction of the driving sprocket 3.

In other words, if the projecting contact portion 33 is formed, the driving claw 31 is positioned closer to the rearward center line (y1) than the forward center line (y2) in the rotational direction of the driving sprocket 3, compared with the case in which no projecting contact portion is provided. This means that the driving claw 31 will be returned toward the central position of the engaging recess 62 in the belt circumferential direction.

### [Rib Portion]

The rib portion 32 of the driving sprocket 3 will be described further in detail.

As shown in Figs. 7 to 13, the rib portion 32, provided on the outer circumferential portion of the disk-shaped member 30 of the driving sprocket 3, is formed as mountain-shaped inclined surfaces 34, in which the outer circumferential surface of the rib portion 32 between the driving claws 31 provided at predetermined intervals in the circumferential direction of the driving sprocket 3 has a central part in the lateral direction of the rib portion 32 that is positioned radially outward of the disk-shaped member 30 and also has opposite lateral sides that are positioned radially inward.

The outer circumferential member 14 forming the disk-shaped member 30 has an outer circumferential edge 16 positioned at a crest of the mountain-shaped inclined surfaces 34.

The inclined surfaces 34 act as a receiver for a reaction force of mud compressed between the crawler belt 6 and the inclined surfaces 34 with the driving sprocket 3 being engaged with the crawler belt 6 to be driven, and thus are inclined to provide a component force when the mud that is present between the inclined surfaces 34 and the crawler belt 6 receives compressive action so that the mud may be discharged outward in the lateral direction.

Further, a cutout portion 35 is formed in part of each of the inclined surfaces 34 positioned between the adjacent driving claws 31 on the right surface or left surface alternately. The mud on one side of the crest, in which the cutout portion 35 is present, of the inclined surfaces 34 representing the outer circumferential surface can be discharged radially inward on one side of the disk-shaped member 30 in the lateral direction through the cutout portion 35.

The cutout portion 35 in this description is designed to allow the mud sticking to the outer circumferential surface of the rib portion 32 to be directed radially inward from the outer circumferential surface. More particularly, unlike the inclined surfaces 34 as noted above acting as the receiver for the reaction force of the mud compressed between the crawler belt 6 and the inclined surfaces 34 with the driving sprocket 3 being engaged with the crawler belt 6 to be driven to provide the component force for directing the mud in the lateral direction of the rib portion 32, the cutout portion 35 is provided to form a space for discharging the mud under pressing action of the compression when the mud held between the rib portion 32 and the crawler belt 6 is compressed.

The cutout portion 35 formed in the rib portion 32 is not provided over the entire range of the rib portion 32 positioned between the driving claws 31 mounted forwardly and r-earwardly of the cutout portion 35 in the circumferential direction of the disk-shaped member 30, but is provided at a circumferential interval (S) with the forward or rearward driving claw 31 in the circumferential direction of the disk-shaped member 30 as shown in Fig. 7.

Since the circumferential interval (S) remains in the rib portion 32 in the vicinity of the driving craw 31, the strength for supporting the driving claw 31 by the rib portion 32 is enhanced. In addition, a lateral edge of the rib portion 32 corresponding to the circumferential interval (S) comes into contact with the cored bar projection 63 to still act to regulate positional displacement between the driving sprocket 3 and the crawler belt 6.

### [Modified Embodiment 1]

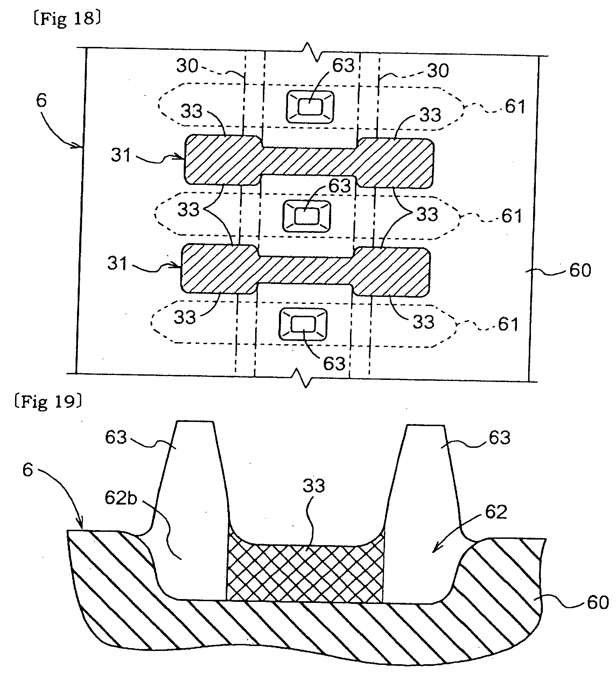

As shown in Fig. 18, the crawler belt 6 in this modified embodiment has a cored bar projection 63 at one and only position in the belt width direction. On the driving sprocket 3, the disk-shaped member 30 shown In imaginary line is positioned to hold the cored bar projection 63 from both right and left sides and to be overlapped with the moving trace of the cored bar projection 63 as viewed from the lateral side. The driving claw 31 is provided to project laterally from the disk surface of the disk-shaped member 30 on the outer circumferential surface of the disk-shaped member 30.

The contact surfaces of the projecting contact portions 33 of the driving claw 31 are provided on opposite lateral sides of the cored bar projection 63 at positions offset from positions opposed to the cored bar projection 63 in the belt width direction, to project in the belt circumferential direction.

### [Modified Embodiment 2]

In the foregoing embodiment, the projecting contact portions 33, which are to be provided on the contact surface opposed to the engaging recess 62 or the driving claw 31 at the portion corresponding to the part between the right and left cored bar projections 63 in the belt width direction of the crawler belt 6, are provided on the contact surface on the driving claw 31 side, but this is not limitative. Instead thereof, the projecting contact portions 33 may be provided on the contact surface on the engaging recess 62 side.

In that case, the projecting contact portions 33 (not shown) to be provided on the engaging recess 62 side may be formed to have the similar shape as the projecting contact portions 33 provided on the driving claw 31 side, on the forward-facing end face 62b and the backward-facing end face 62c of the engaging recess 62 to be opposed to the portions of the forward-facing surface 3 I b and the backward-facing surface 31c of the driving claw 31 each corresponding to the part between the right and left cored bar projections 63 in the belt width direction.

As a still alternative thereto, as shown in checkered pattern in Fig. 19, each projecting contact portion 33 to be provided on the crawler belt 6 may be formed over the entire width of the space between the right and left cored bar projections 63. When the projecting contact portion 33 is thus provided on the crawler belt 6, it is not required to make the lateral width of the projecting contact portion 33 narrower than the space between the right and left cored bar projections 63, taking account of the positional displacement in the lateral direction between the right and left cored bar projections 63 and the driving claw 31. Thus, the projecting contact portion 33 usefully has an increased lateral width to secure a large contact area, which easily allows effective energy absorption.

### [Modified Embodiment 3]

The shape of each of the projecting contact portions 33 is not limited to the shapes as shown in the foregoing embodiments. Although not shown, the projecting contact portion 33 may have a rectangular shape as viewed from the lateral side or the contact surface may bulge in an arc, for example. As viewed from the top as well, the projecting contact portion 33 may have a rectangular shape or the contact surface may bulge in an arc.

### INDUSTRIAL APPLICABILITY OF THE INVENTION

The crawler propelling device according to the present invention may be used as a propelling device for various types of vehicles, including a combine-harvester, construction machinery and the like, other than the tractor as shown and described in the embodiment.

### DESCRIPTION OF THE REFERENCE NUMERAL(S)/MARK(S)

- 2: crawler propelling device
- 3: driving sprocket
- 6: crawler belt
- 30: disk-shaped member
- 31: driving claw
- 32: rib portion
- 33: projecting contact portion
- 60: belt main body
- 61: cored bar
- 62: engaging recess
- 63: cored bar projection

## Claims

1. A crawler propelling device (2) comprising:
a crawler belt (6), the crawler belt (6) including a belt main body (60) made of rubber material, cored bars (61) embedded in the belt main body (60) at predetermined intervals in a belt circumferential direction, and a holler-guiding cored bar projection (63) protruding from an inner circumferential surface of the crawler belt (6); and
a driving sprocket (3) for providing the crawler belt (6) with rotational power in the belt circumferential direction,
wherein the crawler belt (6) has engaging recesses (62) provided on the inner circumferential surface of the crawler belt (6) to be engageable with driving claws (31) of the driving sprocket (3), each of the engaging recesses (62) being positioned between the cored bars in the belt circumferential direction,
wherein the driving claws (31) are provided on an outer circumferential portion of a disk-shaped member (30) of the driving sprocket (3) at predetermined intervals in a circumferential direction of the disk-shaped member (30) to be engaged into the engaging recesses (62) formed in the crawler belt (6), the outer circumferential portion of the disk-shaped member (30) being overlapped with a moving trace of the cored bar projection (63) as viewed from a lateral side,
wherein each of the driving claws (31) is projected laterally from a disk surface of the disk-shaped member (30) in a belt width direction intersecting the disk surface of the disk-shaped member (30), and
wherein the engaging recesses (62) and the driving claws (31) have respective contact surfaces extending in opposition at a distance to each other, and a projecting contact portion (33) is provided on one of the contact surfaces at a position offset in the belt width direction from a position opposed to the cored bar projection (63), the projecting contact portion (33) projecting in a direction to reduce a distance to the other of the contact surfaces, compared with the distance between the respective contact surfaces.

2. A crawler propelling device (2) comprising:
a crawler belt (6), the crawled belt (6) including a belt main body (60) made of rubber material, cored bars (61) embedded in the belt main body (60) at predetermined intervals in a belt circumferential direction, and a pair of right and left roller-guiding cored bar projections (63), each of the cored bar projections (63) protruding from an intermediate portion in a belt width direction of each of the cored bars (61) on an inner circumferential surface of the crawler belt (6); and
a driving sprocket (3) for providing the crawler belt (6) with rotational power in the belt circumferential direction,
wherein the crawler belt (6) has engaging recesses (62) provided on the inner circumferential surface of the crawler belt (6) to be engageable with driving claws (31) of the driving sprocket (3), each of the engaging recesses (62) being positioned between the cored bars in the belt circumferential direction and formed over a range between the right and left cored bar projections in the belt width direction,
wherein the driving claws (31) are formed on an outer circumferential portion of the disk-shaped member (30) of the driving sprocket (3), which portion is fitted into a space between the right and left cored bar projections (63), to be engaged into the engaging recesses (62) formed in the crawler belt (6) at predetermined intervals in the belt circumferential direction of the disk-shaped member (30),
wherein the driving claws (31) are projected from a disk surface of the disk-shaped member (30) to a range where the right and left cored bar projections (63) are present, in the belt width direction intersecting the disk surface of the disk-shaped member (30), and
wherein the engaging recesses (62) and the driving claws (31) have respective contact surfaces extending in opposition at a distance to each other, and a projecting contact portion (33) is provided on one of the contact surfaces corresponding to a portion between the right and left cored bar projections in the belt width direction, the projecting contact portion (33) projecting in a direction to reduce a distance to the other of the contact surfaces, compared with the distance between the respective contact surfaces at a portion outside of the space between the right and left cored projections (63) in the belt width direction.

3. The crawler propelling device as defined in claim 1 or 2, wherein the projecting contact portion (33) is provided on the contact surface on the driving claws.

4. The crawler propelling device as defined in claim 3,
wherein the contact surface of the driving claw (31) excluding the projecting contact portion (33) is shaped to be displaced closer toward an imaginary line segment extending from a rotational center of the driving sprocket (3) to a tip end of the driving claw (31) than a tooth edge-profile of the driving sprocket (3) which were described along an involute curve, and
wherein the contact surface of the projecting contact portion (33) formed on the driving claw (31) is shaped along the tooth edge profile of the driving sprocket (3) which were described along the involute curve.

## Patentansprüche

1. Raupenantriebsvorrichtung (2), umfassend:
ein Raupenband (6), wobei das Raupenband (6) einen Bandhauptkörper (60) aus einem Kautschukmaterial, Kernstäbe (61), die in vorherbestimmten Abständen in der Bandumfangsrichtung in den Bandhauptkörper (60) eingebettet sind, und einen rollenführenden Kernstabvorsprung (63), der von einer inneren Umfangsfläche des Raupenbands (6) vorspringt, und
ein Antriebskettenrad (3), um dem Raupenband (6) eine Umdrehungskraft in der Bandumfangsrichtung bereitzustellen,
wobei das Raupenband (6) Eingreifaussparungen (62) aufweist, die so an der inneren Umfangsfläche des Raupenbands (6) bereitgestellt sind, dass sie mit Antriebsklauen (31) des Antriebskettenrads (3) in Eingriff gebracht werden können, wobei jede der Eingreifaussparungen (62) in der Bandumfangsrichtung zwischen den Kernstäben positioniert ist,
wobei die Antriebsklauen (31) so in vorherbestimmten Abständen in einer Umfangsrichtung eines scheibenförmigen Elements (30) des Antriebskettenrads (3) an einem äußeren Umfangsbereich des scheibenförmigen Elements (30) bereitgestellt sind, dass sie in den Eingreifaussparungen (62), die in dem Raupenband (6) gebildet sind, in Eingriff gebracht werden, wobei der äußere Umfangsbereich des scheibenförmigen Elements (30) von einer lateralen Seite her gesehen von einer Bewegungsspur des Kernstabvorsprungs (63) überlappt ist, und
wobei jede der Antriebsklauen (31) in einer Bandbreitenrichtung, die eine Scheibenoberfläche des scheibenförmigen Elements (30) schneidet, seitlich von der Scheibenoberfläche des scheibenförmigen Elements (30) vorspringt, und
wobei die Eingreifaussparungen (62) und die Antriebsklauen (31) jeweilige Kontaktflächen aufweisen, die einander in einem Abstand gegenüberliegend verlaufen, und an einer der Kontaktflächen an einer Position, die in der Bandbreitenrichtung von einer Position, die dem Kernstabvorsprung (63) gegenüberliegt, versetzt ist, ein vorspringender Kontaktabschnitt (33) bereitgestellt ist, wobei der vorspringende Kontaktabschnitt (33) in eine solche Richtung vorspringt, dass der Abstand zu der anderen der Kontaktflächen verglichen mit dem Abstand zwischen den jeweiligen Kontaktflächen verringert wird.

2. Raupenantriebsvorrichtung (2), umfassend:
ein Raupenband (6), wobei das Raupenband (6) einen Bandhauptkörper (60) aus einem Kautschukmaterial, Kernstäbe (61), die in vorherbestimmten Abständen in der Bandumfangsrichtung in den Bandhauptkörper (60) eingebettet sind, und ein Paar aus einem rechten und einem linken rollenführenden Kernstabvorsprung (63), wobei jeder der Kernstabvorsprünge (63) von einem Zwischenbereich in einer Bandbreitenrichtung eines jeden der Kernstäbe (61) an einer inneren Umfangsfläche des Raupenbands (6) vorspringt, und
ein Antriebskettenrad (3), um dem Raupenband (6) eine Umdrehungskraft in der Bandumfangsrichtung bereitzustellen,
wobei das Raupenband (6) Eingreifaussparungen (62) aufweist, die so an der inneren Umfangsfläche des Raupenbands (6) bereitgestellt sind, dass sie mit Antriebsklauen (31) des Antriebskettenrads (3) in Eingriff gebracht werden können, wobei jede der Eingreifaussparungen (62) in der Bandumfangsrichtung zwischen den Kernstäben positioniert ist und über einen Bereich zwischen dem rechten und dem linken Kernstabvorsprung in der Bandbreitenrichtung gebildet ist,
wobei die Antriebsklauen (31) so an einem äußeren Umfangsbereich des scheibenförmigen Elements (30) des Antriebskettenrads (3), welcher Bereich in einen Raum zwischen dem rechten und dem linken Kernschienenvorsprung (63) gesetzt ist, gebildet sind, dass sie in den Eingreifaussparungen (62), die in dem Raupenband (6) in vorherbestimmten Abständen in der Bandumfangsrichtung des scheibenförmigen Elements (30) gebildet sind, in Eingriff gebracht werden,
wobei die Antriebsklauen (31) in der Bandbreitenrichtung, die die Scheibenoberfläche des scheibenförmigen Elements (30) schneidet, von einer Scheibenoberfläche des scheibenförmigen Elements (30) zu einem Bereich, in dem der rechte und der linke Kernstabvorsprung (63) vorhanden sind, vorspringen, und
wobei die Eingreifaussparungen (62) und die Antriebsklauen (31) jeweilige Kontaktflächen aufweisen, die einander in einem Abstand gegenüberliegend verlaufen, und an einer der Kontaktflächen, die einem Abschnitt zwischen dem rechten und dem linken Kernstabvorsprung in der Bandbreitenrichtung entspricht, ein vorspringender Kontaktabschnitt (33) bereitgestellt ist, wobei der vorspringende Kontaktabschnitt (33) in eine solche Richtung vorspringt, dass der Abstand zu der anderen der Kontaktflächen verglichen mit dem Abstand zwischen den jeweiligen Kontaktflächen in einem Abschnitt außerhalb des Raums zwischen dem rechten und dem linken Kernstabvorsprung (63) in der Bandbreitenrichtung verringert wird.

3. Raupenantriebsvorrichtung nach Anspruch 1 oder 2, wobei der vorspringende Kontaktabschnitt (33) an der Kontaktfläche an den Antriebsklauen bereitgestellt ist.

4. Raupenantriebsvorrichtung nach Anspruch 3,
wobei die Kontaktfläche der Antriebsklaue (31) mit Ausnahme des vorspringenden Kontaktabschnitts (33) so geformt ist, dass sie näher zu einem imaginären Liniensegment, das sich von einem Drehzentrum des Antriebskettenrads (3) zu einem Spitzenende der Antriebsklaue (31) erstreckt, hin versetzt ist, als ein Zahnrandprofil des Antriebskettenrads (3), das entlang einer Evolventenkurve beschrieben würde, und
wobei die Kontaktfläche des vorspringenden Kontaktabschnitts (33), der an der Antriebsklaue (31) gebildet ist, entlang des Zahnrandprofils des Antriebskettenrads (3) das entlang der Evolventenkurve beschrieben würde, geformt ist.

## Revendications

1. Dispositif de propulsion à chenille (2) comportant :
une courroie de chenille (6), la courroie de chenille (6) comprenant un corps principal de courroie (60) composé de caoutchouc, des barres noyées (61) incorporées au corps principal de courroie (60) à des intervalles prédéterminés dans une direction circonférentielle de courroie, et une saillie de barre noyée de guidage de galet (63) qui dépasse d'une surface circonférentielle intérieure de la courroie de chenille (6) ; et
un barbotin moteur (3) destiné à fournir à la courroie de chenille (6) une puissance de rotation dans la direction circonférentielle de courroie,
dans lequel la courroie de chenille (6) a des renfoncements d'engagement (62) prévus sur la surface circonférentielle intérieure de la courroie de chenille (6) afin de pouvoir être engagés avec des griffes d'entraînement (31) du barbotin moteur (3), chacun des renfoncements d'engagement (62) étant positionné entre les barres noyées dans la direction circonférentielle de courroie,
dans lequel les griffes d'entraînement (31) sont prévues sur une partie circonférentielle extérieure d'un élément en forme de disque (30) du barbotin moteur (3) à des intervalles prédéterminés dans une direction circonférentielle de l'élément en forme de disque (30) afin d'être engagées dans les renfoncements d'engagement (62) formés dans la courroie de chenille (6), la partie circonférentielle extérieure de l'élément en forme de disque (30) étant chevauchée par une trace mobile de la saillie de barre noyée (63) telle que vue depuis le côté,
dans lequel chacune des griffes d'entraînement (31) dépasse latéralement d'une surface de disque de l'élément en forme de disque (30) dans une direction de largeur de courroie qui coupe la surface de disque de l'élément en forme de disque (30), et
dans lequel les renfoncements d'engagement (62) et les griffes d'entraînement (31) ont des surfaces de contact respectives qui s'étendent en opposition à une distance l'une de l'autre, et une partie de contact saillante (33) est prévue sur une des surfaces de contact dans une position décalée dans la direction de largeur de courroie depuis une position opposée à la saillie de barre noyée (63), la partie de contact saillante (33) dépassant dans une direction de réduction d'une distance jusqu'à l'autre des surfaces de contact, comparée à la distance entre les surfaces de contact respectives.

2. Dispositif de propulsion à chenille (2) comportant :
une courroie de chenille (6), la courroie de chenille (6) comprenant un corps principal de courroie (60) composé de caoutchouc, des barres noyées (61) incorporées au corps principal de courroie (60) à des intervalles prédéterminés dans une direction circonférentielle de courroie, et une paire de saillies de barre noyée de guidage de galet droite et gauche (63), chacune des saillies de barre noyée (63) dépassant d'une partie intermédiaire dans une direction de largeur de courroie de chacune des barres noyées (61) sur une surface circonférentielle intérieure de la courroie de chenille (6) ; et
un barbotin moteur (3) destiné à fournir à la courroie de chenille (6) une puissance de rotation dans la direction circonférentielle de courroie,
dans lequel la courroie de chenille (6) a des renfoncements d'engagement (62) prévus sur la surface circonférentielle intérieure de la courroie de chenille (6) afin de pouvoir être engagés avec des griffes d'entraînement (31) du barbotin moteur (3), chacun des renfoncements d'engagement (62) étant positionné entre les barres noyées dans la direction circonférentielle de courroie et formé sur une plage entre les saillies de barre noyée droite et gauche dans la direction de largeur de courroie,
dans lequel les griffes d'entraînement (31) sont formées sur une partie circonférentielle extérieure de l'élément en forme de disque (30) du barbotin moteur (3), laquelle partie est montée dans un espace entre les saillies de barre noyée droite et gauche (63), afin d'être engagées dans les renfoncements d'engagement (62) formés dans la courroie de chenille (6) à des intervalles prédéterminés dans la direction circonférentielle de l'élément en forme de disque (30),
dans lequel les griffes d'entraînement (31) dépassent d'une surface de disque de l'élément en forme de disque (30) dans une plage où les saillies de barre noyée droite et gauche (63) sont présentes, dans la direction de largeur de courroie qui coupe la surface de disque de l'élément en forme de disque (30), et
dans lequel les renfoncements d'engagement (62) et les griffes d'entraînement (31) ont des surfaces de contact respectives qui s'étendent en opposition à une distance l'une de l'autre, et une partie de contact saillante (33) est prévue sur une des surfaces de contact correspondant à une partie entre les saillies de barre noyée droite et gauche dans la direction de largeur de courroie, la partie de contact saillante (33) dépassant dans une direction de réduction d'une distance jusqu'à l'autre des surfaces de contact, comparée à la distance entre les surfaces de contact respectives dans une partie à l'extérieur de l'espace entre les saillies de barre noyée droite et gauche (63) dans la direction de largeur de courroie.

3. Dispositif de propulsion à chenille selon la revendication 1 ou 2, dans lequel la partie de contact saillante (33) est prévue sur la surface de contact sur les griffes d'entraînement.

4. Dispositif de propulsion à chenille selon la revendication 3, dans lequel la surface de contact de la griffe d'entraînement (31) à l'exclusion de la partie de contact saillante (33) est formée pour être déplacée plus près vers un segment de ligne imaginaire s'étendant depuis un centre de rotation du barbotin moteur (3) jusqu'à une extrémité de la griffe d'entraînement (31) qu'un profil de bord de dent du barbotin moteur (3) qui était décrit le long d'une courbe développante, et
dans lequel la surface de contact de la partie de contact saillante (33) formée sur la griffe d'entraînement (31) est formée le long du profil de bord de dent du barbotin moteur (3) qui était décrit le long de la courbe développante.
